# EUROPEAN PATENT SPECIFICATION

(11) **EP 2 152 796 B1**
(45) Date of publication and mention of the grant of the patent: **12.08.2015**
(21) Application number: 08770220.5
(22) Date of filing: 05.06.2008
(51) Int. Cl.: C08K 5/15

(54) **RADIATION CURABLE COATING COMPOSITION DERIVED FROM EPOXIDIZED VEGETABLE OILS**
AUS EPOXIDISIERTEN PFLANZENÖLEN GEWONNENE STRAHLUNGSHÄRTBARE BESCHICHTUNGSZUSAMMENSETZUNG
COMPOSITION DE REVÊTEMENT DURCISSABLE PAR RAYONNEMENT DÉRIVÉE D'HUILES VÉGÉTALES ÉPOXYDÉES

(30) Priority: 05.06.2007 US 942174 P
(43) Date of publication of application: 17.02.2010
(73) Proprietor: Akzo Nobel Coatings International B.V., 6824 BM Arnhem (NL)
(72) Inventor: GARDNER, Kenneth, J., Independence, OH 44131 (US); MILLER, Patricia, Cleveland, OH 44111 (US); CRAUN, Gary, P., Berea, OH 44017 (US)
(74) Representative: Akzo Nobel IP Department
(86) International application number: PCT/US2008/065946
(87) International publication number: WO 2008/151286

(56) References cited:
- WO-A1-00/11068
- WO-A1-01/12711
- WO-A1-2006/138637
- DE-C1- 10 225 367
- US-A- 4 012 559
- US-A- 5 733 970
- US-A1- 2002 151 626

## Description

### RELATED APPLICATION

This application claims benefit and priority under 35 U.S.C. 119(e) from provisional patent application entitled "Radiation Curable Coating Composition Derived From Epoxidized Vegetable Oils", having Serial No. 60/942,174 filed June 5, 2007, the entire contents of the aforementioned patent application are incorporated herein by reference.

### BRIEF DESCRIPTION OF THE DISCLOSURE

The present disclosure relates to radiation curable coating compositions that can provide useful coatings and coated surfaces for packaging materials such as metal cans and the like for the storage of food substances.

### TECHNICAL CONSIDERATIONS FOR THE DISCLOSURE

Currently available radiation curable coatings such as those that cure through ultra-violet ("UV") radiation or electron beam ("EB") radiation have a tendency to be inflexible cured coatings that are prone to higher levels of shrinkage. Consequently, coatings utilizing chemistry for such curing have been heretofore recognized by those skilled in the art to be inadequate in terms of direct to metal adhesion, formability, and retort resistance, as required in rigid packaging coatings applications (e.g. two and three piece cans, ends, (full aperature easy open ends (FAEOE) etc), as well as limited in application in terms of adhesion and extensibility within the flexible packaging industry. Attempts to address these concerns can lead to disadvantages of relying on either; (1) processes which require high temperature flash before initiating the radiation cure, as in polyurethane dispersions ("PUD's"), (2)cationic chemistry, which suffers the disadvantage of humidity inhibition of cure, photoinitiator, and currently, high cost due to supply issues, (3) application of high temperature bake, post radiation cure, and/or application of prime coat, to confer adhesion, or (4) alternately, reliance on conventional solvent and waterborne thermoset chemistries, which regress to the disadvantages of release of volatile organic compounds ("VOC's"), BADGE/NOGE moieties, and time, labor, and energy intensive processes. Thus, any composition which addresses one or more of these issues, while also dispensing with one or more of these disadvantages in radiation cure coatings chemistry would provide one or more benefits for use while positively impacting safety, health, and environmental concerns.

### SUMMARY OF THE DISCLOSURE

The various embodiments of the present invention may include a radiation curable, for example ultra-violet ("UV) or electron beam ("EB") curable, coating composition having at least one oligomer derived from non-aromatic epoxides such as an epoxidized vegetable oil ("EVO") reacted with hydroxyl functional compounds in the presence of acid catalysts to produce the EVO oligomer. In one embodiment of the invention the hydroxyl functional compound includes at least one hydroxyl functional acrylate or hydroxyl functional methacrylate to produce the EVO oligomer. In another embodiment of the invention the acid catalyst is a strong acid catalyst and can be one or more sulfonic acids. For example a strong acid catalyst such as a triflate salt of a metal of Group IIA, IIB, IIIA, IIIB or VIIIA of the Periodic Table of Elements (according to the IUPAC 1970 convention) can be used. In another embodiment of the invention alcohols, diols, polyols, polyethers, polycarbonates, polyesters, or other hydroxyl functional materials can be included with hydroxyl functional acrylic or methacrylic monomers and EVO to produce the EVO oligomer.

The radiation curable coatings herein containing EVO oligomers have been found to be more flexible than coatings containing only multifunctional acrylates such as urethane di- acrylates, or polyol di-, tri- and tetra- acrylates, for example.

In another embodiment of the invention the EVO oligomer derived from non-aromatic epoxidized vegetable oils reacted with at least one of a hydroxyl functional acrylic and a methacrylic monomers in the presence of an acid catalyst is further reacted with one or more di-isocyanate to produce a acrylate/urethane/EVO hybrid oligomer.

In another embodiment of the present invention the radiation curable coating composition containing EVO oligomer and/or the acrylate/urethane/EVO hybrid oligomer can also include one or more mono and/or di- and/or poly-functional acrylate materials.

The radiation curable coating composition with the EVO material provides for radiation cured coatings that are essentially free of BADGE and NOGE even at low energy electron beam curing. In another embodiment of the invention the radiation cured coating can also provide retort resistance for rigid packaging applications according to the most common retort tests know for rigid metal packaging applications. Also in another embodiment of the present invention the radiation curable coating composition with EVO oligomer and/or acrylate/urethane/EVO hybrid oligomer can be used without the need for a prime coat so as to be in direct contact with a metal substrate.

The above summary of the present disclosure is not intended to describe each disclosed embodiment or every implementation of the present invention. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### DETAILS OF THE DISCLOSURE

As used in the afore-discussed embodiments and other embodiments of the disclosure and claims described herein the following terms generally have the meaning as indicated, but these meaning are not meant to limit the scope of the invention if the benefit of the invention is achieved by inferring a broader meaning to the following terms.

Other than in the operating examples, or where otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should be construed in light of the number of significant digits and ordinary rounding approaches. Notwithstanding that the numerical ranges and parameters setting forth the broad scope of the invention are approximations, the numerical values set forth in the specific example are reported as precisely as possible. Any numerical value, however, inherently contains certain errors necessarily resulting from the standard deviation found in their respective testing measurements. Unless stated otherwise, all percentages, ratios and proportions herein are by weight and particularly unless otherwise specified stated, the proportions of the components in the compositions described are given in percentage pertaining to the total mass of the mixture of these components.

Also herein, the recitations of numerical ranges by endpoints include all numbers subsumed within that range (e.g., 1 to 5 includes 1, 1.5, 2, 2.75, 3, 3.80, 4, 5, etc.).

Also herein, "a," "an," "the", "at least one," and "one or more" are used interchangeably.

Also herein, the terms "comprises" and variations thereof do not have a limiting meaning where these terms appear in the description and claims. Also all temperatures are in degrees Centigrde (° C) unless otherwise specified.

The present invention provides for various embodiments of a radiation curable coating composition having at least one oligomer derived from non-aromatic epoxides such as an epoxidized vegetable oil ("EVO") reacted with hydroxyl functional compounds in the presence of acid catalysts to produce the EVO oligomer. In one embodiment of the invention the hydroxyl functional compound used to produce the EVO oligomer includes at least one hydroxyl functional acrylate or a hydroxyl functional methacrylate or both a hydroxyl functional acrylate and a hydroxyl functional methacrylate . Suitable acrylates include, but are not limited to, butane diol mono-acrylate and hydroxy ethyl acrylate, for example, and suitable methacrylates include, but are not limited to, hydroxy propyl methacrylate, hydroxy ethyl methacrylate, and the like for example. The amount of EVO used in the reaction to produce the EVO oligomer ranges from about 5% to about 95% by weight based on the weight of the EVO oligomer, and in other examples from about 25% to about 75% by weight EVO based on the weight of the EVO oligomer. The amount of hydroxyl functional acrylate and/or hydroxyl functional methacrylate used in the reaction to produce the EVO oligomer ranges from about 5% to about 95% by weight based on the weight of the EVO oligomer, and in other examples from about 25% to about 75% by weight hydroxyl functional acrylate and/or hydroxyl functional methacrylate based on the weight of the EVO oligomer.

In another embodiment, additional hydroxyl functional materials can be included with the at least one hydroxyl functional acrylate or the at least one hydroxyl functional methacrylate or mixtures thereof, in the preparation of the EVO oligomer. Additional hydroxy functional materials can include, but are not limited to, alcohols,; diols, polyols, polyesters, and polyethers, for example, for example compounds such as, benzyl alcohol, trimethylol propane, for example polypropylene glycol, hexane diol,

Various embodiments of the radiation curable coating composition comprising EVO oligomer provides for radiation cured coatings are essentially free of BADGE and NOGE even when cured at low energy curing, such as electron beam curing. The various radiation cured coating compositions described herein have improved flexibility and are, for example, more flexible than coatings with other acrylate coatings, such as multifunctional acrylates for example urethane di- acrylates, or polyol di-, tri- and tetra- acrylates. The coating compositions herein can also provide retort resistance for rigid packaging applications according to the most common retort tests know for rigid metal packaging applications. The curable coating compositions herein can be used without the need for a prime coat so as to be in direct contact to metal substrates.

The acid catalyst can be a strong acid catalyst such as one or more sulfonic acids. The amount of sulfonic acid can range from about 1 ppm to about 10,000 ppm, and in other examples, from about 10 ppm to about 1,000ppm. In another embodiment of the invention the strong acid catalyst can be from a triflate salt of a metal of Group IIA, IIB, IIIA, IIIB or VIIIA of the Periodic Table of Elements (according to the IUPAC 1970 convention). Suitable catalysts include the Group IIA metal triflate catalyst like magnesium triflate; the Group IIB metal triflate catalyst is like zinc or cadmium triflate; the Group IIIA metal triflate catalyst such as lanthanum triflate; the Group IIIB metal triflate catalyst such as aluminium triflate; and the Group VIIIA metal triflate catalyst such as cobalt triflate. The amount of the metal triflate catalyst used can ranges from 10 to 1000 ppm, especially from 20 to 200 ppm, based on the total weight of the reaction mixture. It is generally convenient to employ the metal triflate catalyst in the form of a solution in an organic solvent. Examples of suitable solvents include aromatic hydrocarbon solvents; cycloaliphatic polar solvents such as cycloaliphatic ketones e.g. cyclohexanone; polar aliphatic solvents, such as alkoxyalkanols, especially 2-methoxyethanol; as well as the diol starting material. The amount of the triflate catalyst used can ranges from 10 to 1000 ppm, especially from 20 to 200 ppm, based on the total weight of the reaction mixture.

The epoxidized vegetable oil can be derived from any one or more unsaturated vegetable oil alone or in combination with other vegetable oils. Vegetable oils contain primarily glycerides which are triesters of glycerol and fatty acids with varying degrees of unsaturation. For example, suitable vegetable oils are unsaturated fatty acid triglycerides, such as esters of glycerol and fatty acid having an alkyl chain of 12 to 24 carbon atoms with at least two non-conjugated double bonds. Fatty acid glycerides which are triglycerides in unsaturated glyceride oils are generally referred to as drying oils or semidrying oils. Typical drying oils include linseed oil and perilla oil, while typical semidrying oils include tall oil, soybean oil, and safflower oil. Useful triglyceride oils can have identical fatty acid chains or alternatively can have different fatty acid chains attached to the same glycerol molecule. Suitable oils have fatty acid chains containing non-conjugated double bonds. Single double bond or conjugated double bond fatty acid chains can be used in minor amounts. Double bond unsaturation in glycerides is conventionally measured by iodine value (number) which indicates the degree of double bond unsaturation in the fatty acid chains. Unsaturated fatty acid glycerides oil useful in this disclosure have an iodine value greater than 50 and preferably between 100 and 210.

Naturally occurring vegetable oils ordinarily are not pure compounds but instead are mixtures of fatty acid chains present as glycerides and comprise a distribution of fatty acid esters of glyceride, where the fatty acid distribution may be random but within an established range that may vary moderately depending on growing conditions of the vegetable source. Soybean oil for example comprises approximately about 11% palmitic, 4% stearic, 25% oleic, 51% linolenic, and 9% linoleic fatty acids, where oleic, linoleic and linolenic are unsaturated fatty acids. Useful unsaturated vegetable oils are those glyceride oils containing considerable amounts of non-conjugated unsaturated fatty acid glyceride esters such as linoleic and linolenic fatty acids.

Commercial and useful unsaturated glyceride oils include corn oil, cottonseed oil, grapeseed oil, hempseed oil, linseed oil, wild mustard oil, peanut oil, perilla oil, poppyseed oil, rapeseed oil, safflower oil, sesame oil, soybean oil, sunflower oil, canola oil and tall oil. Suitable fatty acid glycerides include those which contain linoleic and linolenic fatty acid chains and include oils such as hempseed oil, linseed oil, perilla oil, poppyseed oil, safflower oil, soybean oil, sunflower oil, canola oil and tall oil, as well as grapeseed, rattonseed and corn oils, and similar oils which contain high levels of linoleic and linolenic fatty acid glyceride. Suitalbe glycerides can contain lesser amounts of saturated fatty acids. The more suitable oils, for example soybean oil, contain predominantly linoleic and linolenic fatty acid glycerides.

Such vegetable oils can by fully or partially epoxidized by known processes using acid, for example peroxy acid for epoxidation of unsaturated double bonds of the unsaturated vegetable oil.

Also commercially available sources of epoxidized vegetable oil can be used such as for epoxidized soy oil is available commercially, under the trade designations "VIKOLOX" and " VIKOFLEX" from Elf Atochem North America, Inc., Philadelphia, Pa., The reactivity of this oil is low since only secondary alcohols are obtained and these are inherently less reactive than primary. Other suitable epoxidized vegetable oil include epoxidized linseed oil, epoxidized cotton seed oil and epoxidized carthamus oil.

In another embodiment of the present invention the radiation curable coating composition comprises an EVO oligomer which is an acrylate/urethane/EVO hybrid. The EVO oligomer is derived from a non-aromatic epoxidized vegetable oil (EVO) reacted with at least one of a hydroxyl functional acrylic or a hydroxyl functional methacrylic in the presence of an acid catalyst, and is further reacted with one or more di-isocyanates and/or poly-isocyanate to produce an acrylate/urethane/EVO hybrid in a two-step process. In another embodiment, the acrylate/urethane/EVO hybrid can optionally include additional hydroxyl functional materials which include, but are not limited to, alcohols, diols, polyols, polyesters, polyethers, and mixtures thereof. In one embodiment the EVO can be reacted with at least one of a hydroxyl functional acrylic or a hydroxyl functional methacrylic and additional hydroxyl functional materials, before it is further reacted with one or more di-isocyanates and/or poly-isocayanates.

The amount of di-isocyanate and/or poly-isocayanate used in the reaction can vary and in one embodiment the acrylate/urethane/EVO oligomer contains up to about 50% by weight di-isocyanate and/or poly-isocyanate, and in other examples from about 5% to about 30% by weight acrylate. The amount of di-isocyanate and/or poly-isocyanate present is less than about 50% based on the weight of the coating composition, and in other examples ranges from about 1% to about 30% based on the weight of the coating composition.

The acrylate/urethane/EVO hybrid oligomers can provide additional flexibility, adhesive properties to the coating composition. In another embodiment of the present invention the radiation curable coating composition herein comprising an EVO oligomer and/or an acrylate/urethane/EVO hybrid oligomer described above can be blended with mono, and/or di- and/or tri-functional acrylates to produce a less viscous coating composition.

The process for making an acrylic/urethane/EVO oligomer, such as an ESO, for example, comprises reacting materials in a two step process. In one embodiment, the EVO is combined with an excess of at least one of a hydroxyl functional acrylate and a hydroxyl functional methacrylate in the presence of an acid catalyst to acrylate the EVO. Suitable acrylates, as described above can include butane diol mono-acrylate, hydroxy ethyl acrylate, hydroxy propyl methacrylate, hydroxy ethyl methacrylate, and the like. Hydroxyl functional acrylates which are more reacive than hydroxyl functional methacrylates may be preferred over hydroxyl functional methacrylates. Primary hydroxyl functional monomers may be preferred over secondary hydroxyl functional monomers. Additional hydroxy functional materials such as alcohols, diols, polyols, polyesters, polyethers, and the like can be included with the hydroxy functional monomers in the preparation of the EVO oligomer, or they can be added just prior to the addition of the isocyanate to form the acrylate/urethane/EVO hybrid oligomer. Suitable hydroxyl functional materials can include but are not limited to, hydroxyl functional polyesters, polypropylene glycol, hexane diol, benzyl alcohol, trimethylol propane, and the like.

An air atmosphere and an effective inhibitor, for example, phenothiazine can be used during this step to prevent free radical polymerization of the monomer. The reaction of the EVO and the hydroxyl functional acrylate and hydroxyl functional methacrylates can be carried out at a temperature that ranges from about 70°C and 120°C, an in other examples from about 90°C to about 100°C. Typically up to 90% conversion of the epoxide groups can be obtained in about 1 hour at 90°C with a super acid catalyst like zinc triflate.

Other suitable catalysts, as described above, include the Group IIA metal triflate catalyst like magnesium triflate; the Group IIB metal triflate catalyst is like zinc or cadmium triflate; the Group IIIA metal triflate catalyst such as lanthanum triflate; the Group IIIB metal triflate catalyst such as aluminium triflate; and the Group VIIIA metal triflate catalyst such as cobalt triflate. The amount of the metal triflate catalyst used can ranges from 10 to 1000 ppm, especially from 20 to 200 ppm, based on the total weight of the reaction mixture. As mentioned, it is generally convenient to employ the metal triflate catalyst in the form of a solution in an organic solvent.

The EVO oligomer produced can be converted to an acrylate/urethane/EVO hybrid by reaction with di-isocyanate and/or poly-isocyanate at a temperature that ranges from about 20°C to about 90°C, from about 25°C to about 70°C. Accordingly upon cooling, the EVO oligomer can be converted to an isocyanate containing hybrid by reaction with di-isocyanate, such as isophorone di-isocyanate (IPDI), through reaction with both the excess hydroxyl functional acrylate monomer and the acrylated ESO. Although not wishing to be bound by any particular theory it is believed that when ESO reacts with the hydroxyl functional monomer, the epoxide ring on the fatty acid opens to form an ether-acrylate and a hindered secondary hydroxyl. Although not wishing to be bound by any particular theory, it is believed that the isocyanate preferentially reacts with the primary hydroxyl functional monomer to form a urethane di-acrylate in situ. GPC can be used to confirm that a lower molecular weight species (likely the urethane di-acrylate) is forming, but it can also indicate that a higher molecular weight species is forming, likely a urethane modified ESO acrylate. The ESO reaction with the hydroxyl functional acrylates is best run with an excess of hydroxyl functionality to push this reaction to higher conversion, and to reduce the ESO self-extension reaction, which can lead to higher viscosity and even gelation. By reacting with both the secondary hydroxyls of the ESO acrylate and the primary hydroxyls of the acrylate monomer the isocyanate forms a hybrid.

In another embodiment of the present invention the radiation curable coating comprising an acrylic/urethane/EVO hybrid oligomer can also include one or more mono and/or di- and/or tri-functional acrylate materials.

The various embodiments of the radiation curable coating compositions described herein can be applied to a metal substrate, for example a can used as packaging materials for example. In one embodiment a packaging comprising a metal substrate and a radiation curable coating composition disposed on the substrate, the coating composition comprising an epoxidized vegetable oil oligomer made from the reaction of epoxidized vegetable oil (EVO) and at least one hydroxyl functional acrylate or a hydroxyl functional methacrylate in the presence of an acid catalyst. In another embodiment, the radiation curable coating composition directly contacts the metal substrate without a prime coat.

In another embodiment the packaging comprises a metal substrate and radiation curable coating composition comprising the various embodiments of the EVO oligomer and the acrylate/urethane/EVO oligomers and blends described above. In another embodiments, the radiation curable coating composition can directly contacts the metal substrate without a prime coat.

The following examples are given for the purpose of illustrating the described systems and processes and should not be construed as limitations on the scope or spirit thereof.

### EXAMPLES

In Examples 1-4, oligomers A, B, C and D were prepared using epoxidized soy bean oil ("ESBO").

### Oligomer A

### ESO Acrylate Preparation

Prepare the ESBO acrylate with 2 moles of butane diol mono-acrylate for each equivalent of epoxide in ESBO:

| | |
|---|---|
| 100g | ESBO (Dow Chemical) |
| 131.7g | butane diol mono-acrylate (BASF) |
| 1.0g | A-218 (40% zinc triflate, King Industries) |
| 0.11g | phenothiazine (Aldrich) |

Warm in an oil bath to 90°C under a 40 cfm air flow. An exotherm is noted at about 80°C. Slowly warm the bath from 80 to 90°C as the exotherm subsides. Cool. Oxirane titration indicates 90% conversion of the oxirane.

### Formation of the Urethane Hybrid Oligomer:

Assuming 0.46 moles of free acrylate, add 0.23 moles (50.3g) of isophorone di-isocyanate (Bayer) and 0.18g stannous octoate catalyst at 20°C. Slight exotherm noted. Warm the oil bath to 55°C and hold 1 hour. Cool. Product is of moderate viscosity (about 500 cps) and clear.

EB cure of the ESO acrylate was tested along side the ESBO urethane acrylate hybrid, and clearly the hybrid resulted in improved film properties, such as adhesion, and hardness. The free acrylate monomer in the ESO acrylate is thought to detract from the EB cured film properties. The hybrid can also be used at higher levels (70% or more) than the ESBO acrylate in mixtures with traditional EB cure acrylates without loss of properties. ESBO is bio-renewable and low in cost, so this hybrid meets both these goals.

### Oligomer B

| | |
|---|---|
| 150g | epoxidized soy bean oil |
| 148g | butanediol monoacrylate |
| 0.2g | phenothiazine |
| 1.0g | A-218, King Industries blocked super acid catalyst |

The above was mixed in a 1 liter flask, and placed in an 85 C hot water bath. The mixture was stirred while sweeping the flask with 50 cc air/min. Initial exotherm carried the reaction temperature to 92 C and raised the bath temperature to 90 C as the reaction temperature fells, to maintain the reaction at 90 C. The mixture was cooled after 1 hour. Oxirane titration indicates about 95% conversion of the epoxide.

### Oligomer C

| | |
|---|---|
| 100g | epoxidized soy bean oil |
| 131.7g | butanediol monoacrylate |
| 1.0g | A-218 |
| 0.11g | phenothiazine |

The above materials were reacted as in the preparation of oligomer A. Add 50.8g isophorone diisocyanate after cooling to 20 C, then add 0.2 g stannous octoate. Exotherm noted to about 30 C, and then cools. Leave stir gently overnight, and then heat to 55C next day under 50 cc/min air. Slight exotherm noted. Hold 1 hour. Cool.

### Oligomer D

### Polyester Pre-polymer:

| | |
|---|---|
| 480.8g | butylethylpropane diol |
| 404.5g | sebacic acid |
| 0.4g | butyl stanoic acid |

Heat under nitrogen with a short column to 160 C, where the first water of esterification was noted in the overhead. Continue heating to 225 C gradually over 1 hour to remove about 60g water. Switch to a xylene azeotrophe to remove the remaining water over about 2 hours. Final acid number 0.94 mg KOH/g polymer.

### EVO oligomer D is prepared with the polyester pre-polymer:

| | |
|---|---|
| 75g | epoxidized soy bean oil |
| 50g | butanediol monoacrylate |
| 70.6g | polyester prepolymer |
| 0.2g | phenothiazine |
| 1.0g | A-218 |

Mix the above, and hold 1 hour under air at 90 C in a hot oil bath. Cool.

In Comparative Examples 1 - 4 coating compositions were made without the use of oligomers, and in Examples 5-9 coating compositions were made using oligomers A, B, C, or D produced in Examples 1-4 above. The amount of materials used in all examples are listed in parts by weight. Several coating properties were tested and the results are listed in Table I below.

### Comparative Example 1

A) Monofunctional Acrylate Monomer/ isobornylacrylate ("IBOA") ( e.g. Genomer 1121/ Rahn): 37.1315
B) Saturated inert oligomer ( e.g. Genomer 6043EHA/ Rahn ): 18.6712
C) Carboxyfunctional Acrylate (e.g. Genomer 7154/ Rahn): 25.7816
D) Acidic Methacrylate (e.g. Genorad 40/Rahn): 2.2955
E) Metallic Acrylate (e.g. CN2404/Sartomer): 13.8787
F) Polymethyldisiloxane ("PDMS") Acrylate (e.g.Tegorad 2500/Degussa): 0.2174
G) Polytetrafluroethylene ("PTFE") Dispersion (e.g. Everglide UV704/Shamrock): 2.023

### Example 5

A) Monofunctional Acrylate Monomer/IBOA (e.g. Genomer 1121/Rahn): 20.6089
B) Oligomer A : 26.4564
C) Urethane Acrylate (e.g. Ebecryl 8807/Cytec): 28.9774
D) Propoxylated trimethyolpropanetriacrylate ("TMPTA") (e.g. CD 501/Sartomer): 2.2953
E) Acidic Methacrylate (e.g. Bis Hema Phosphate/Hampford Research): 4.2210
F) Acidic Methacrylate (e.g.' Genorad 40/Rahn): 3.9718
G) Metallic Acrylate (e.g. CN2404/Sartomer): 12.8520
H) PDMS Acrylate (e.g. Tegorad 2500/Degussa): 0.6065

### Comparative Example 2

A) Monofunctional Acrylate Monomer / IBOA (e.g. Genomer 1121/Rahn): 58.00
B) Monofunctional Urethane Acrylate (e.g. Genomer 4188EHA/Rahn): 18.00
C) Trifunctional Urethane Acrylate (e.g Genomer 4312/Rahn): 12.00
D) Propoxylated neopentylglycoldiacrylate ("NPGDA") (e.g. Miramer M216/Rahn): 10.00
E) Acidic Methacrylate (e.g. Genorad 40/Rahn): 2.00

### Comparative Example 3

A) Monofunctional Acrylate Monomer / IBOA (e.g. Genomer 1121/Rahn): 38.49
B) Aliphatic Urethane Acrylate (e.g. Laromer 9033V/BASF): 45.28
C) Trifunctional Polyester Acrylate (e.g. Ebecryl 885/ Cytec): 4.93
D) Acrylic Oligomer (e.g. CN 2285/Sartomer): 5.22
E) Acidic Acrylate (e.g. ECX 4046/Cognis): 4.24
F) Acidic Methacrylate (e.g.Genorad 40/Rahn): 1.48
G) PDMS Acrylate (e.g. Tegorad 2500/Degussa): 0.36

### Example 6

A) Monofunctional Acrylate Monomer / IBOA (e.g. Genomer 1121/Rahn): 11.1949
B) Oligomer B: 61.2534
C) Metallic Acrylate (e.g. CN 2404 / Sartomer): 10.8909
D) Propoxylated TMPTA (e.g. CD 501 / Sartomer): 1,5029
E) Bis Hema Phosphate (Hampton Research, Inc): 5.2582
F) PDMS Acrylate (e.g. Tegorad 2500/Degussa): 0.5664
G) Polyester modified PDMS acrylate (Byk UV3570 /Altana : 0.6360
H) Deionized Water: 8.6973

### Example 7

A) Monofunctional Acrylate Monomer /IBOA (e.g. Genomer 1121/Rahn): 30.00
B) Oligomer C : 65.00
C) Alkoxylated HDDA (e.g. CD 560 / Sartomer): 3.00
D) Propoxylated NPGDA (e.g. Miramer M216 / Rahn): 3.00
E) Acidic Acrylate (e.g. ECX 4046 / Cognis): 3.00
F) Acidic Methacrylate (e.g. Genorad 40 / Rahn): 1.00
G) PDMS Acrylate (e.g. Tegorad 2500/Degussa): 0.30

### Example 8

A) Monofunctional Acrylate Monomer / IBOA (e.g. Genomer 1121/Rahn): 40.5
B) Urethane Acrylate (e.g. 615-100 / Polymer Technologies): 26.5
C) Oligomer C: 17.7
D) Acidic Acrylate (e.g. ECX 4046 / Cognis): 3.5
E) Acidic Methacrylate (e.g. Genorad 40 / Rahn): 1.00
F) Acidic Acrylate (e.g. Photomer 4703 / Cognis): 9.6
G) Polyethylene Wax (e.g. MPP 620 XF/ Micropowders): 0.70
H) PDMS Acrylate (e.g. Tegorad 2500/Degussa): 0.50

### Comparative Example 4

A) Monofunctional Acrylate Monomer / IBOA (e.g. Genomer 1121/Rahn): 42.5
B) Urethane Acrylate (e.g. 615-100 / Polymer Technologies): 50.00
C) Acidic Acrylate (e.g. ECX 4046 / Cognis): 4.1
D) Acidic Methacrylate (e.g. Genorad 40 / Rahn): 1.00
E) Acidic Acrylate (e.g. Photomer 4703 / Cognis): 10.9
F) PDMS Acrylate (e.g. Tegorad 2500/Degussa): 0.50

### Example 9

A) Monofunctional Acrylate Monomer / IBOA (e.g. Genomer 1121/Rahn): 20.00
B) Acrylate of Glicydyl ester of Versatic acid (e.g. ACE monomer/ Hexion): 12.68
C) HPNDA (e.g. Miramer M210 / Rahn): 2.08
D) Urethane Acrylate (e.g. 615-100 / Polymer Technologies): 23.53
E) Oligomer C: 12.68
F) Oligomer D: 9.58
G) Acidic Acrylate (e.g. Photomer 4703 / Cognis): 13.05
H) Acidic Acrylate (e.g. ECX 4046 / Cognis): 2.20
I) Acidic Methacrylate (e.g. Genorad 40 / Rahn): 0.77
J) PDMS Acrylate (e.g. Tegorad 2500/Degussa): 0.52
K) Hyperbranched Polyester Acrylate (e.g. CN 2302 / Sartomer): 0.76
L) PTFE/PE Wax Blend (e.g. Vestowax FM 1012 30% dispersion in ACE monomer / Degussa): 1.92

Component A is dispensed to lined vessel. Remaining components are added sequentially to vessel under low speed turbine agitation.

### Test Sample Preparation

In the specific examples disclosed herein presented mixtures were applied using Meyer rod to ETP and/or TFS to a dry film thickness of 0.2 - 0.3 mils. Samples are EB cured under nitrogen purge at 90kV/4 MR on an Advanced Electron Beam Lab Unit Model EBLAB125. The disclosure is not in any means to be considered to narrow the scope of the claim as to source of actinic/redox/thermal energies. Substrate may be pre/post conditioned to enhance adhesion using any means known to the art, including flame treatment, plasma treatment, chemical treatment, pre/post exposure to EB energy, Coating system may also be pre/postconditioned by exposure to electrical current, IR, UV, Microwave, Thermal energy, etc. Work herein disclosed utilized pre EB energy exposure.

| Test Protocol | | | | | Table I- Test Results | | | | |
|---|---|---|---|---|---|---|---|---|---|
| | Comp Ex. 1 | Ex. 5 | Comp Ex. 2 | Comp Ex. 3 | Ex. 6 | Ex. 7 | Ex. 8 | Comp Ex. 4 | Ex 9 |
| Gloss/Clarity; | Pass | Pass | Pass | Pass | Pass | Pass | Pass | Pass | Pass |
| Adhesion: % | 100 | 100 | 100 | 100 | 100 | 100 | 100 | 100 | 100 |
| Thumb Twist: | Pass | Pass | Pass | Pass | Pass | Pass | Pass | Pass | Pass |
| | | | | | | | | | |
| End Forming: | Pass | ------ | ----- | ------ | ----- | ------ | ------ | ------ | ------ |
| Tbend: | 0T | 2T | 2T | ------ | 5T | ------ | ------ | ------ | ------ |
| Pencil Hardness: | HB | H | B | ------ | 2H | ------- | ----- | ------ | ------ |
| Impacted Wedge | ------ | ------ | ------- | ------ | ------ | 100 | ------ | 100 | ------ |
| Retort; Blister/Blush: | 2/10 | 10/9 | 10/7 | 10/10 | ------ | 10/7 | 10/10 | 10/10 | 10/8 |
| Post Retort Adhesion: | 100 | 100 | 100 | 100 | ------ | 100 | 100 | 100 | 100 |
| | | | | | | | | | |
| Post Retort Wedge: | ------ | ------ | ------ | 95 | ------ | 76 | 87 | 100 | 85 |
| Post Retort Stain | ------ | ------ | ------ | ------ | ------ | ------ | 10 | 10 | 8 |

### Retort conditions:

Comparative Examples 1-3 and Example 5: 30' @ boiling water
Example 7: 90'@262F DI Water
Comparative Example 4: 90'@262F Cheddar Cheese Soup
Example 9: 90'@262F Jalapeño Peppers

Modifications/substitutions of the invention, comprising, e.g. hyperbranched oligomeric species, metallic acrylates or moieties, acidic acrylates or moieties; nanoscale and hybrid systems/species i.e. cationic/free radical, hybrid urethane,polyester,acrylic/ epoxidized natural oil acrylates, hybrid organic/inorganic; chlorine, fluorine, bromine, silicone oligomer modifications, polybutadiene, polyisoprene, polycarbonate, polycaprolactone modifications, POSS, PUD, hydroxylated siloxanes or moieties; saturated inert oligomers; vinyl moieties, i.e.pyrollidones, capralactam, limonene dioxide; (meth)acrylates, mono, di, multifunctional ; epoxy, phenyl , thiol, groups; charge transfer complexes; any of various additives common to the art, for purposes of conferring wetting, flow, slip, barrier, abrasion resistance, defoaming, etc. i.e. silicones/silicone acrylates, fluorocarbon/fluorocarbon acrylates, acrylics, natural/synthetic waxes and oils, et al, shall be construed to be within the scope of this invention.

While the present invention is described in detail with reference to the preferred embodiments, those skilled in the art will appreciate that in addition to those provided by way of example, various modifications and substitutions, not otherwise specified, can be made without departing from the spirit and scope of the present invention as set forth.

## Claims

1. A radiation curable coating composition comprising an epoxidized vegetable oil oligomer made from the reaction of epoxidized vegetable oil (EVO) and at least one hydroxyl functional acrylate or a hydroxyl functional methacrylate in the presence of an acid catalyst.

2. The coating composition of claim 1, wherein the epoxidized vegetable oil oligomer is made from the reaction of epoxidized vegetable oil and at least one hydroxyl functional acrylate selected from the group of butane diol mono-acrylate, hydroxy ethyl acrylate and mixtures thereof.

3. The coating composition of claim 1, wherein the epoxidized vegetable oil oligomer is made from the reaction of epoxidized vegetable oil and at least one hydroxyl functional methacrylate selected from the group of hydroxy propyl methacrylate, hydroxy ethyl methacrylate, and mixtures thereof.

4. The coating composition of claim 1, wherein the acid catalyst is a strong acid.

5. The coating composition of claim 1, wherein the acid catalyst comprises a sulfonic acid.

6. The coating composition of claim 4, wherein the acid catalyst comprises a triflate salt of a metal of Group IIA, IIB, IIIA, IIIB or VIIIA of the Periodic Table of Elements (according to the IUPAC 1970 convention).

7. The coating composition of claim 1, wherein the acid catalyst is selected from the group of magnesium triflate, zinc triflate, cadmium triflate, lanthanum triflate, aluminium triflate, cobalt triflate and mixtures thereof.

8. The coating composition of claim 1, wherein the epoxidized vegetable oil is derived from an unsaturated fatty acid glycerides.

9. The coating composition of claim 8, wherein the unsaturated fatty acid glycerides comprise esters of glycerol and fatty acid having an alkyl chain of 12 to 24 carbon atoms.

10. The coating composition of claim 1, wherein the epoxidized vegetable oil is derived from glyceride oils comprising at least one of linoleic and linolenic fatty acids.

11. The coating composition of claim 1, wherein the epoxidized vegetable oil comprises corn oil, cottonseed oil, grapeseed oil, hempseed oil, linseed oil, wild mustard oil, peanut oil, perilla oil, poppyseed oil, rapeseed oil, safflower oil, sesame oil, soybean oil, sunflower oil, canola oil, and tall oil.

12. The coating composition of claim 1, wherein the epoxidized vegetable oil oligomer is derived from the reaction of an epoxidized vegetable oil comprising soybean oil and butane diol mono-acrylate.

13. The coating composition of claim 1, wherein the epoxidized vegetable oil oligomer is derived from the reaction of an epoxidized vegetable oil comprising soybean oil and hydroxy ethyl acrylate.

14. The coating composition of claim 1, wherein the epoxidized vegetable oil oligomer is further reacted with at least one of a di-isocyanates and a poly- isocyanate to produce an acrylic/urethane/EVO hybrid.

15. The coating composition of claim 14, wherein the epoxidized vegetable oil oligomer is made from the reaction of an epoxidized vegetable oil comprising soybean oil.

16. The coating composition of claim 1 or 14, further comprising at least one multifunctional acrylate.

17. A packaging comprising: a metal substrate; and a radiation curable coating composition according to any one of the preceding claims disposed on the substrate.

18. The packaging of claim 17, wherein the radiation curable coating composition directly contacts the metal substrate without a prime coat.

## Patentansprüche

1. Strahlungshärtbare Beschichtungszusammensetzung umfassend ein epoxidiertes Pflanzenöl-Oligomer, hergestellt aus der Reaktion von epoxidiertem Pflanzenöl (EVO) und mindestens einem hydroxylfunktionellen Acrylat oder einem hydroxylfunktionellen Methacrylat in Gegenwart eines Säurekatalysators.

2. Beschichtungszusammensetzung nach Anspruch 1, wobei das epoxidierte Pflanzenöl-Oligomer hergestellt ist aus der Reaktion von epoxidiertem Pflanzenöl und mindestens einem hydroxylfunktionellen Acrylat, ausgewählt aus der Gruppe von Butandiolmonoacrylat, Hydroxyethylacrylat und Mischungen daraus.

3. Beschichtungszusammensetzung nach Anspruch 1, wobei das epoxidierte Pflanzenöl-Oligomer hergestellt ist aus der Reaktion von epoxidiertem Pflanzenöl und mindestens einem hydroxylfunktionellen Methacrylat, ausgewählt aus der Gruppe von Hydroxypropylmethylacrylat, Hydroxyethylmethacrylat und Mischungen daraus.

4. Beschichtungszusammensetzung nach Anspruch 1, wobei der Säurekatalysator eine starke Säure ist.

5. Beschichtungszusammensetzung nach Anspruch 1, wobei der Säurekatalysator eine Sulfonsäure umfasst.

6. Beschichtungszusammensetzung nach Anspruch 4, wobei der Säurekatalysator ein Triflatsalz eines Metalls der Gruppe IIA, IIB, IIIA, IIIB oder VIIIA des Periodensystems der Elemente (nach der IUPAC-Konvention von 1970) umfasst.

7. Beschichtungszusammensetzung nach Anspruch 1, wobei der Säurekatalysator aus der Gruppe ausgewählt ist, die folgendes umfasst: Magnesiumtriflat, Zinktriflat, Cadmiumtriflat, Lanthanumtriflat, Aluminiumtriflat, Kobalttriflat und Mischungen daraus.

8. Beschichtungszusammensetzung nach Anspruch 1, wobei das epoxidierte Pflanzenöl aus ungesättigten Fettsäureglyceriden stammt.

9. Beschichtungszusammensetzung nach Anspruch 8, wobei die ungesättigten Fettsäureglyceride Ester von Glycerol und Fettsäure umfassen, die eine Alkylkette von 12 bis 24 Kohlenstoffatomen hat.

10. Beschichtungszusammensetzung nach Anspruch 1, wobei das epoxidierte Pflanzenöl aus Glyceridölen mit mindestens einer Linol- und einer Linolenfettsäure stammt.

11. Beschichtungszusammensetzung nach Anspruch 1, wobei das epoxidierte Pflanzenöl folgendes umfasst: Maisöl, Baumwollsamenöl, Traubenkernöl, Hanfsamenöl, Leinsamenöl, Ackersenf-Öl, Erdnussöl, Perillaöl, Mohnöl, Rapsöl, Safloröl, Sesamöl, Sojaöl, Sonnenblumenöl, Canola-Öl und Tallöl.

12. Beschichtungszusammensetzung nach Anspruch 1, wobei das epoxidierte Pflanzenöl-Oligomer aus der Reaktion eines epoxidierten Pflanzenöls umfassend Sojaöl und Butandiolmonoacrylat stammt.

13. Beschichtungszusammensetzung nach Anspruch 1, wobei das epoxidierte Pflanzenöl-Oligomer aus der Reaktion eines epoxidierten Pflanzenöls umfassend Sojaöl und Hydroxyethylacrylat stammt.

14. Beschichtungszusammensetzung nach Anspruch 1, wobei das epoxidierte Pflanzenöl-Oligomer weiterhin zur Reaktion gebracht wird mit mindestens einem Diisocyanat und einem Polyisocyanat, um ein Acryl/Urethan/ EVO- - Hybrid herzustellen.

15. Beschichtungszusammensetzung nach Anspruch 14, wobei das epoxidierte Pflanzenöl-Oligomer aus der Reaktion eines epoxidierten Pflanzenöls umfassend Sojaöl hergestellt ist.

16. Beschichtungszusammensetzung nach Anspruch 1 oder 14, weiterhin umfassend mindestens ein multifunktionelles Acrylat.

17. Verpackung umfassend: ein Metallsubstrat und eine strahlungshärtbare Beschichtungszusammensetzung nach einem der vorhergehenden Ansprüche, die auf dem Substrat angeordnet ist.

18. Verpackung nach Anspruch 17, wobei die strahlungshärtbare Beschichtungszusammensetzung das Metallsubstrat direkt ohne eine Grundierung berührt.

## Revendications

1. Composition de revêtement durcissable par rayonnement comprenant un oligomère d'huile végétale époxydée réalisé à partir de la réaction d'une huile végétale époxydée (EVO) et d'au moins un acrylate à fonction hydroxyle ou un méthacrylate à fonction hydroxyle en présence d'un catalyseur acide.

2. Composition de revêtement de la revendication 1, dans laquelle l'oligomère d'huile végétale époxydée est réalisé à partir de la réaction d'une huile végétale époxydée et d'au moins un acrylate à fonction hydroxyle choisi dans le groupe constitué de monoacrylate de butanediol, d'acrylate d'hydroxyéthyle et de mélanges de ceux-ci.

3. Composition de revêtement de la revendication 1, dans laquelle l'oligomère d'huile végétale époxydée est réalisé à partir de la réaction d'une huile végétale époxydée et d'au moins un méthacrylate à fonction hydroxyle choisi dans le groupe constitué de méthacrylate d'hydroxypropyle, de méthacrylate d'hydroxyéthyle, et de mélanges de ceux-ci.

4. Composition de revêtement de la revendication 1, dans laquelle le catalyseur acide est un acide fort.

5. Composition de revêtement de la revendication 1, dans laquelle le catalyseur acide comprend un acide sulfonique.

6. Composition de revêtement de la revendication 4, dans laquelle le catalyseur acide comprend un sel de triflate d'un métal du Groupe IIA, IIB, IIIA, IIIB ou VIIIA du tableau périodique des éléments (selon la convention IUPAC 1970).

7. Composition de revêtement de la revendication 1, dans laquelle le catalyseur acide est choisi dans le groupe constitué de triflate de magnésium, de triflate de zinc, de triflate de cadmium, de triflate de lanthane, de triflate d'aluminium, de triflate de cobalt et de mélanges de ceux-ci.

8. Composition de revêtement de la revendication 1, dans laquelle l'huile végétale époxydée est dérivée de glycérides d'acides gras insaturés.

9. Composition de revêtement de la revendication 8, dans laquelle les glycérides d'acides gras insaturés comprennent des esters de glycérol et d'acide gras ayant une chaîne alkyle de 12 à 24 atomes de carbone.

10. Composition de revêtement de la revendication 1, dans laquelle l'huile végétale époxydée est dérivée d'huiles glycéridiques comprenant au moins l'un des acides gras linoléique et linolénique.

11. Composition de revêtement de la revendication 1, dans laquelle l'huile végétale époxydée comprend l'huile de maïs, l'huile de coton, l'huile de pépins de raisin, l'huile de chènevis, l'huile de lin, l'huile de moutarde sauvage, l'huile d'arachide, l'huile de périlla, l'huile d'oeillette, l'huile de colza, l'huile de carthame, l'huile de sésame, l'huile de soja, l'huile de tournesol, l'huile de canola, et l'huile de tall.

12. Composition de revêtement de la revendication 1, dans laquelle l'oligomère d'huile végétale époxydée est dérivé de la réaction d'une huile végétale époxydée comprenant l'huile de soja et d'un monoacrylate de butanediol.

13. Composition de revêtement de la revendication 1, dans laquelle l'oligomère d'huile végétale époxydée est dérivé de la réaction d'une huile végétale époxydée comprenant l'huile de soja et d'un acrylate d'hydroxyéthyle.

14. Composition de revêtement de la revendication 1, dans laquelle l'oligomère d'huile végétale époxydée est en outre amené à réagir avec au moins l'un d'un diisocyanate et d'un polyisocyanate pour produire un hybride acrylique/uréthane/EVO.

15. Composition de revêtement de la revendication 14, dans laquelle l'oligomère d'huile végétale époxydée est réalisé à partir de la réaction d'une huile végétale époxydée comprenant l'huile de soja.

16. Composition de revêtement de la revendication 1 ou 14, comprenant en outre au moins un acrylate multifonctionnel.

17. Emballage comprenant : un substrat métallique ; et une composition de revêtement durcissable par rayonnement selon l'une quelconque des revendications précédentes disposée sur le substrat.

18. Emballage de la revendication 17, dans lequel la composition de revêtement durcissable par rayonnement entre directement en contact avec le substrat métallique sans couche primaire.
